# DEMANDE DE BREVET EUROPEEN

(11) **EP 1 462 840 A1**
(43) Date de publication de la demande: **29.09.2004**
(21) Numéro de dépôt: 04290720.4
(22) Date de dépôt: 16.03.2004
(51) Int. Cl.: G02B 27/01

(54) **Procédé d'affichage d'une image sur un pare-brise de véhicule et dispositif de mise en oeuvre**

(30) Priorité: 28.03.2003 FR 0303839
(71) Demandeur: VALEO VISION, 93012 Bobigny Cédex (FR)
(72) Inventeur: Albou, Pierre, 75013 Paris (FR); Peltier, Arnaud, 91190 Gif Sur Yvette (FR); Bourdin, David, 93390 Clichy Sous Bois (FR); Gelebart, Bernard, 94220 Charenton Le Pont (FR)
(74) Mandataire: Renous Chan, Véronique

(57) **Abrégé**

L'invention concerne un procédé d'affichage d'image sur un pare-brise de véhicule, comportant les opérations suivantes :
- capture d'une image réelle d'une scène de route,
- affichage de i'image sur un moyen d'affichage,
- réflexion de l'image dans un système optique,
- réflexion de l'image sur le pare brise,
ce procédé comportant une opération de déformation de l'image réelle avant l'affichage sur le moyen d'affichage.

## Description

### Domaine de l'invention

L'invention concerne un procédé pour afficher des images sur un pare-brise de véhicule dans le but, notamment, de permettre la vision de nuit de la scène de route se déroulant devant le véhicule. L'invention concerne également un dispositif pour mettre en oeuvre ce procédé.

L'invention trouve des applications dans le domaine des véhicules circulant sur des routes comme, par exemple, les véhicules automobiles ou les véhicules poids lourds. Elle trouve, en particulier, des applications dans le domaine de la vision de nuit pour ces véhicules.

### Etat de la technique

Compte tenu du nombre important de véhicules circulant sur les routes, il est important de procurer, au conducteur de chaque véhicule, une vision optimale de la route qui s'étend devant lui ainsi que des bas-côtés de cette route. La route qui s'étend devant le véhicule ainsi que ses bas-côtés sont appelés scène de route.

Pour des questions de sécurité, on cherche actuellement à améliorer la vision de la scène de route par le conducteur du véhicule. Pour cela, il existe des dispositifs de visualisation dits à tête haute (ou head up displays, en terme anglosaxons) situés dans les véhicules. Généralement, ces dispositifs de visualisation à tête haute permettent d'émettre une image de la scène de route, prise par exemple avec une caméra infrarouge, et de la reproduire sur le pare-brise du véhicule. Il existe déjà, sur certains véhicules, des dispositifs à tête haute qui affichent, sur le pare-brise, une image ou du texte fournissant des informations particulières au conducteur. Cette image ou ce texte sont affichés, généralement, sur la partie haute ou, au contraire, sur la partie basse du pare-brise. Ils ne sont pas affichés au centre du pare-brise afin de ne pas gêner la vision normale du conducteur. En effet, dans les dispositifs à tête haute, l'information affichée est fournie au conducteur, en plus des informations reçues par sa propre vision de la scène de route.

Toutefois, de nuit, il serait intéressant d'afficher une image de la scène de route dans une zone plus centrale du pare-brise, c'est-à-dire une zone que le conducteur peut visualiser sans avoir à détourner de façon trop substantielle le regard. L'affichage d'une telle image permettrait au conducteur de visualiser l'image de la scène de route en plus de la scène de route réelle. En particulier, la nuit, s'il fait très sombre et que le conducteur distingue mal la scène de route réelle, il serait intéressant qu'une image de la scène de route soit affichée sur le pare-brise, à proximité de l'emplacement de la vision de la scène de route réelle par le conducteur.

Autrement dit, il serait intéressant de pouvoir afficher une image complète et de bonne qualité de la scène de route, dans une zone du pare-brise que le conducteur peut regarder sans avoir à détourner le regard de la scène de route réelle. En particulier, cette image de la scène de route pourrait être affichée au-dessus d'une ligne de coupure de l'éclairage. Cette ligne, appelée « coupure » est une ligne d'éclairage maximum au-dessus de laquelle il est interdit d'éclairer en mode de croisement. Elle est définie par une norme. Dans les pays à circulation à droite, elle est horizontale sur toute la largeur de la route et sur le bas coté gauche de la route et elle forme un angle de 15° au-dessus de l'horizontale sur le bas coté droit de la route.

Cependant, les pare-brise des véhicules actuels ne sont généralement pas plats. Ils se comportent comme des miroirs à deux focales ayant deux rayons de courbure, à savoir un rayon de courbure dans la verticale du pare-brise et un rayon de courbure dans l'horizontale du pare-brise. Ces deux rayons de courbure sont très différents l'un de l'autre. En particulier, on comprend que le rayon de courbure dans l'horizontale, c'est-à-dire dans la largeur du pare-brise, est nettement supérieur au rayon de courbure dans la verticale du pare-brise, c'est-à-dire dans la hauteur du pare-brise. En outre, pour certains pare-brise, le rayon de courbure dans la verticale n'est pas identique sur toute la surface du pare-brise.

Ainsi, une image affichée dans la zone centrale du pare-brise est déformée verticalement et horizontalement, avec une déformation différente à l'horizontale et à la verticale. On comprend alors qu'il est nécessaire de corriger l'image afin d'obtenir une image non déformée, ou tout au moins avec une déformation acceptable, pour ne pas gêner le confort de visualisation du conducteur. En outre, pour que cette image améliore la vision du conducteur, il faut qu'elle soit nette et qu'elle présente une bonne résolution.

Pour corriger une telle image, il est possible d'utiliser un système optique avec plusieurs lentilles, aligné avec le pare-brise. Cependant, pour qu'un tel système optique puisse corriger correctement l'image de la scène de route, il est nécessairement volumineux, avec des proportions trop importantes pour être introduit dans un véhicule et, en particulier, dans le tableau de bord d'un véhicule.

Une autre solution consiste à utiliser un système optique replié, dans lequel la lumière est réfléchie un certain nombre de fois et, éventuellement, est réfractée par des lentilles avant d'être projetée sur le pare-brise qui a alors un rôle de miroir. Un tel système optique replié est décrit dans la demande de brevet EP - A - 0 744 643. Ce système comporte un grand nombre de lentilles destinées à corriger une image émise par un afficheur, avant sa projection sur le pare-brise. Ce système est très complexe et relativement volumineux puisqu'il nécessite un grand nombre de lentilles. Or, la place disponible dans un tableau de bord de véhicule est relativement restreinte. En outre, les lentilles présentent un réel inconvénient car elles créent une certaine dispersion de l'image et entraînent des effets chromatiques. Il est alors nécessaire d'ajouter de nouvelles lentilles pour corriger ces effets chromatiques, ce qui complexifie encore le système optique.

Comme on vient de le dire, dans un véhicule, l'encombrement du système d'affichage doit être relativement restreint pour entrer dans le tableau de bord du véhicule. Par exemple, l'espace disponible dans le tableau de bord, pour introduire un système d'affichage sans en modifier l'arrangement, est d'environ 200 x 300 x 90 mm³. En particulier, la hauteur disponible est la dimension la plus faible, soit environ 90 mm.

Or, pour des images de la scène de route située devant le véhicule, dans les cas d'un système d'aide à la vision de nuit, la zone d'intérêt est large (comprenant des virages, croisements éventuels, piétons sur les bords de route, talus, etc.) mais limitée en hauteur. En effet, le bas d'une image de format 4/3 standard suffisamment large, verticalement centrée sur l'horizon, ne contient que le revêtement de la route à quelques mètres devant le véhicule et le haut de l'image ne contient que le haut des arbres, le ciel ou les étages des immeubles. Ainsi, on peut considérer que le format adapté d'une image à afficher sur le pare-brise est de 2/1. Compte tenu de la forme de l'image, la face de sortie du système d'affichage (qui doit bien évidemment se trouver sur le dessus du système), si elle occupe avantageusement tout ou l'essentiel de la largeur disponible, n'occupe en revanche qu'une partie de la profondeur (entre un tiers et la moitié). Le système optique peut donc être replié le long de l'axe de véhicule, le volume disponible se trouvant entre le volant et la face de sortie.

### Exposé de l'invention

L'invention a justement pour but de remédier aux inconvénients des techniques exposées précédemment. A cette fin, elle propose un procédé pour afficher des images sur un pare-brise de véhicule, avec une netteté et une distorsion acceptable pour le conducteur du véhicule. Pour cela, le procédé de l'invention propose de déformer volontairement les images émises par l'afficheur avant qu'elles ne soient réfléchies par le système optique, cette déformation de l'image étant compensée naturellement par des déformations inverses du système optique et du pare-brise.

Plus précisément, l'invention concerne un procédé d'affichage d'image sur un pare brise de véhicule, comportant les opérations suivantes :
- émission d'une image par un afficheur,
- réflexion de l'image dans un système optique,
- affichage de l'image réfléchie sur le pare brise,
caractérisé en ce que l'image émise par l'afficheur est déformée avant d'être réfléchie par le système optique.

L'invention concerne également un dispositif permettant de mettre en oeuvre le procédé de l'invention. Ce dispositif d'affichage d'image sur un pare-brise de véhicule comporte un afficheur d'image et un système optique. Il se caractérise par le fait qu'il comporte des moyens électroniques de déformation de l'image émise par l'afficheur.

### Brève description des figures

La figure 1 représente le dispositif d'affichage d'image de l'invention associé à un pare-brise de véhicule.

La figure 2 représente la partie électronique du dispositif d'affichage d'image de l'invention.

### Description détaillée de modes de réalisation de l'invention

Le dispositif d'affichage d'image de l'invention propose d'afficher une image de la scène de route au centre du pare-brise du véhicule et, plus particulièrement, dans la zone où se porte le regard du conducteur lorsqu'il regarde la route.

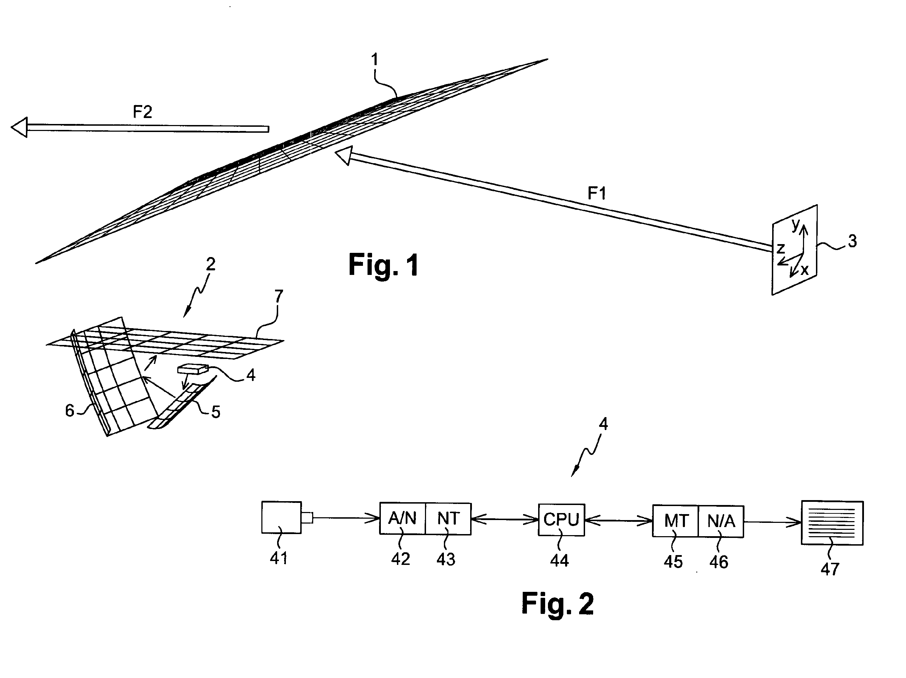

On a représenté, sur la figure 1, un exemple de pare-brise de véhicule sur lequel une image de la scène de route est affichée avec le dispositif de l'invention. Plus précisément, la figure 1 montre, selon une vue en perspective, un pare-brise 1 de véhicule, le dispositif d'affichage d'image 2 et la position des yeux du conducteur 3. Cette position des yeux du conducteur 3 est représentée dans un repère X, Y, Z.

Une flèche F1 représente la direction du regard du conducteur. Une flèche F2 représente la direction de la scène de route observée par le conducteur, c'est-à-dire l'image virtuelle affichée sur le pare-brise.

Comme on le verra en détail par la suite, le dispositif d'affichage de l'invention 2 comporte un système optique associé à un système électronique. Ce système électronique 4, qui sera décrit en détail par la suite, a pour but de capturer une image de la scène de route, de traiter et d'afficher cette image sur un afficheur ou écran. Le système optique a pour but de réfléchir l'image de l'afficheur sur le pare-brise 1 du véhicule.

Pour cela, le système optique comporte plusieurs miroirs de réflexion et, de préférence, deux miroirs. Ce système optique est un système replié qui présente l'avantage d'un encombrement relativement réduit, sans présence de lentilles (qui apportent des défauts dus à la réfraction). Les miroirs ont l'avantage de ne pas présenter de problème de chromatisme. Ils sont donc capables de réfléchir une image sans défaut de chromatisme à corriger. On sait, en outre, que la réflexion d'une image par des miroirs permet d'obtenir une bonne résolution de l'image, c'est-à-dire une bonne netteté de l'image.

Par contre, comme expliqué précédemment, les pare-brise des véhicules actuels ne sont pas plats. Ils présentent un premier rayon de courbure, dans le plan horizontal, et un second rayon de courbure, dans le plan vertical, généralement bien supérieur au premier rayon de courbure. Une image affichée directement sur un pare-brise (c'est-à-dire sans traitement) est donc déformée.

Pour compenser cette déformation, l'invention propose d'utiliser les degrés de liberté des miroirs du système optique. En effet, chaque miroir du système optique est orientable, dans l'espace. Cette orientation et/ou la définition des surfaces asphériques des miroirs (par exemple les paramètres tels que la focale, la conicité, etc.) permettent de jouer sur la distorsion de l'image réfléchie. L'association de deux miroirs permet de réduire cette distorsion et, par exemple, de la limiter à un seul axe. Autrement dit, le système optique peut être positionné de façon à ce que la distorsion de l'image soit nulle, ou quasiment nulle, selon l'axe horizontal. L'image n'est alors déformée, en particulier comprimée, que selon l'axe vertical. La courbure dans le plan horizontal est ainsi compensée par le degré de liberté des miroirs du système optique.

Par contre, la courbure dans le plan vertical est trop importante pour être compensée par le système optique. Pour compenser cette courbure verticale par des miroirs, il faudrait un nombre élevé de miroirs et/ou de lentilles, ce qui serait trop complexe et volumineux pour permettre une réflexion correcte de l'image sur le pare-brise.

L'invention propose d'utiliser la courbure verticale du pare-brise, comme un atout pour compenser une image affichée déformée. Autrement dit, l'invention propose de déformer volontairement l'image sur l'afficheur avant qu'elle ne soit émise en direction du système optique. Le système optique et le pare-brise jouent alors un rôle de compensateur d'une image déformée.

La déformation volontaire de l'image sur l'afficheur prend en compte le fait que l'afficheur est un afficheur standard et que, par conséquent, il a un format de 4/3. En d'autres termes, l'afficheur a un écran d'affichage plus large que haut, avec un rapport de 4/3.

Par ailleurs, on cherche à obtenir, sur le pare-brise, une image d'un format de 2/1, c'est-à-dire une image 2 fois plus large que haute.

Le procédé de l'invention propose alors de traiter, par le système électronique, l'image capturée avant de l'afficher sur l'afficheur. Ce traitement consiste à déformer l'image afin d'obtenir une image de la zone d'intérêt, dilatée verticalement. Pour cela, le procédé de l'invention consiste à sélectionner, dans l'image de format 4/3, la zone d'intérêt de l'image, c'est-à-dire la zone centrale contenant les informations relatives aux obstacles potentiels dans la scène de route. Autrement dit, sur une image d'un format de 4/3, on sélectionne le tiers central vertical de l'image, c'est-à-dire que l'on retire la bande supérieure de l'image et la bande inférieure de l'image qui ne présentent pas un intérêt particulier pour le conducteur du véhicule. En effet, on constate que le tiers inférieur de l'image montre généralement le revêtement de la route, à quelques mètres devant le véhicule, et le tiers supérieur de l'image montre les arbres, le ciel ou le haut des immeubles, ce qui ne présente pas d'intérêt pour le conducteur du véhicule.

Lorsque la zone d'intérêt de l'image a été extraite, l'image est ensuite déformée par une dilatation selon une des dimensions de l'image. Autrement dit, on décale l'image avec un facteur prédéfini, par exemple d'environ 1,5, selon l'axe vertical. L'image est ainsi étalée selon l'axe vertical. Cette dilatation de l'image permet ainsi d'obtenir une image qui semble correcte horizontalement mais étalée verticalement.

En d'autres termes, la dilatation de l'image verticalement est obtenue en utilisant les lignes disponibles sur l'afficheur, après avoir retiré la bande supérieure et la bande inférieure de l'image. En fait, l'image d'un format 1/2 est étalée sur un afficheur pour en faire une image d'un format de 4/3. Toute l'image paraît ainsi plus mince et étalée verticalement.

Cette zone d'intérêt extraite et dilatée constitue alors l'image affichée sur l'écran. C'est cette image qui est transmise au système optique. Comme le système optique converge, il comprime l'image verticalement. Particulièrement, le système optique, lors de son réglage, est optimisé de façon à comprimer l'image, verticalement et de façon homogène, d'un facteur prédéfini, par exemple d'environ 2/3. L'image observée est alors d'un format 2/1 correspondant à la taille du pare-brise. On obtient ainsi une image après réflexion sur le pare-brise de la taille voulue, sans distorsion verticale particulière et avec une bonne résolution.

Le système optique du dispositif de l'invention est représenté sur la figure 1. Il comporte un miroir primaire 5 et un miroir secondaire 6 dont l'inclinaison relative dépend, notamment, des dimensions du pare-brise et du coefficient de compression souhaité. Ils sont placés sensiblement en dessous de l'afficheur 4. Ils réfléchissent ainsi l'image affichée sur l'afficheur 4. Plus précisément, l'image émise par l'afficheur 4 est réfléchie par le miroir primaire 5 puis réfléchie par le miroir secondaire 6 et enfin réfléchie sur le pare-brise 1. Le pare-brise 1 constitue alors un miroir sur lequel est réfléchie l'image virtuelle de la scène de route.

Dans le mode de réalisation de la figure 1, une fenêtre de sortie 7 assure la fermeture du système optique. Cette fenêtre 7 n'a pas une fonction particulière, du point de vue optique. Elle est transparente à la lumière et assure la sortie de l'image vers le pare-brise tout en fermant le tableau de bord.

Sur cette figure 1, l'afficheur 4 est représenté par un petit élément rectangulaire. Cet afficheur est constitué par une caméra destinée à capturer l'image réelle de la scène de route et par un ensemble d'éléments électroniques, appelé système électronique.

Cet afficheur 4 est représenté sur la figure 2. Il comporte une caméra 41 qui assure la prise d'image de la scène de route. Cette caméra peut être, par exemple, une caméra infrarouge apte à réaliser des images de nuit de la scène de route.

Cette caméra peut être placée à des emplacements différents sur un véhicule. De préférence, elle est positionnée à proximité du centre de rotation du véhicule, c'est-à-dire à proximité du rétroviseur intérieur du véhicule, par exemple entre le rétroviseur et le pare-brise. Elle peut également être placée sur le tableau de bord ou bien insérée dans un dispositif d'éclairage ou de signalisation du véhicule du type projecteur.

Les images prises par la caméra 41 sont ensuite transmises au système électronique qui assure la déformation de cette image réelle pour la transformer en une image comprimable par le système optique. Ce système électronique comporte une unité de capture de trame 42/43. Cette unité de capture de trame comporte un module 42 de conversion des signaux analogiques reçus de la caméra en signaux numériques. Cette unité de capture de trame comporte aussi une mémoire de trame 43 qui assure la séparation de chaque trame de l'image afin de traiter séparément chacune de ces trames. Ces trames sont ensuite transmises à une unité centrale de traitement 44 (CPU), telle qu'un processeur ou tout autre dispositif électronique permettant d'effectuer du traitement d'image. Cette CPU 44 assure tous les calculs permettant de réaliser la déformation volontaire de l'image. C'est donc cette CPU qui assure l'extraction de la zone d'intérêt de l'image, puis sa dilatation.

La dilatation de l'image est réalisée, par exemple, en tabulant à l'avance, pour chaque pixel de l'image à créer, les deux pixels de l'image source (par exemple, en effectuant un barycentre) ainsi que les deux coefficients de ces pixels. Ces calculs peuvent être faits en virgule fixe, en particulier, lorsque les images sont en noir et blanc, ou bien en virgule flottante, si les capacités des moyens de traitement sont adaptées. Ces calculs de dilatation d'image peuvent être effectués par un programme associé à une mémoire avec des pointeurs. On peut également utiliser un circuit électrique spécialisé comportant toutes les adresses calculées ou bien un DSP, c'est-à-dire un processeur adapté pour effectuer le traitement de l'image.

L'image déformée alors obtenue est transmise à une carte graphique 45/46 comportant une mémoire de trame 45 et un module 46 de conversion des signaux numériques en signaux analogiques. Cette carte graphique permet de recréer une image analogique à partir des informations fournies par la CPU 44. Cette image analogique est transmise ensuite à un écran 47 qui affiche l'image volontairement déformée pour qu'elle soit réfléchie par le système optique.

En pratique, le traitement de l'image peut être effectué par l'ordinateur de bord du véhicule ou bien par un dispositif particulier, tel qu'une carte graphique, un processeur et des mémoires, dédié à l'affichage d'image.

Le traitement de déformation de l'image, tel qu'il vient d'être décrit, fournit un degré de liberté supplémentaire. Ainsi, le système optique fournit un premier degré de liberté, horizontal, et le traitement électronique fournit un second degré de liberté, vertical. La zone d'intérêt de l'image de la scène de route peut ainsi être affichée sur le pare-brise du véhicule, sans déformation apparente et avec une bonne résolution.

Quelles que soient les dimensions et la forme du pare-brise, variable selon les véhicules, le traitement de l'image peut être identique. Seul le système optique doit être optimisé pour chaque type de pare-brise.

## Revendications

1. Procédé d'affichage d'image sur un pare-brise de véhicule, comportant les opérations suivantes :
- capture d'une image réelle d'une scène de route,
- affichage de l'image sur un moyen d'affichage (4),
- réflexion de l'image dans un système optique (5,6),
- réflexion de l'image sur le pare brise (1),
**caractérisé en ce qu'**il comporte une opération de déformation de l'image réelle avant l'affichage sur le moyen d'affichage.

2. Procédé selon la revendication 1, **caractérisé en ce que** la déformation de l'image est déterminée de façon à être substantiellement compensée par une déformation inverse du système optique et du pare-brise.

3. Procédé selon la revendication 1 ou 2, **caractérisé en ce que** la déformation de l'image est réalisée selon une seule des deux dimensions de l'image.

4. Procédé selon l'une quelconque des revendications 1 à 3, **caractérisé en ce que** la déformation de l'image consiste en une extraction d'une zone d'intérêt de l'image.

5. Procédé selon l'une des revendications précédentes, **caractérisé en ce que** la déformation de l'image consiste en une dilatation de la zone d'intérêt selon une des dimensions de l'image.

6. Procédé selon l'une quelconque des revendications 3 à 5, **caractérisé en ce que** le système optique est optimisé pour obtenir une distorsion de l'image selon une seule des dimensions de i'image.

7. Procédé selon l'une quelconque des revendications 1 à 6, **caractérisé en ce que** la déformation est réalisée dans le plan vertical de l'image.

8. Dispositif d'affichage d'image sur un pare-brise de véhicule comportant :
- une caméra de prise d'image (41),
- un moyen d'affichage de cette image (4), et
- un système optique de réflexion de l'image (5,6),
**caractérisé en ce que** le moyen d'affichage comporte un système électronique (42 - 47) de déformation de l'image réelle prise par la caméra.

9. Dispositif selon la revendication 8, **caractérisé en ce que** le système optique comporte au moins deux miroirs de réflexion (5,6).

10. Dispositif selon l'une quelconque des revendications 8 ou 9, **caractérisé en ce que** le système électronique de déformation comporte un processeur (44) de traitement associé à une carte graphique (45).

11. Dispositif selon l'une des revendications 8 à 10, **caractérisé en ce que** la caméra de prise d'image (41) est une caméra de type vision de nuit ou du type caméra à infra-rouges

12. Véhicule notamment de type automobile équipé d'un pare-brise, **caractérisé en ce qu'**il comporte un dispositif d'affichage d'images sur le pare-brise selon l'une quelconque des revendications 8 à 11.
